(19) Europäisches Patentamt / European Patent Office / Office européen des brevets

(11) **EP 3 010 166 A1**

(12) **EUROPEAN PATENT APPLICATION**

(43) Date of publication:
**20.04.2016 Bulletin 2016/16**

(51) Int Cl.:
***H04B 10/61*** *(2013.01)*     ***H04J 14/06*** *(2006.01)*

(21) Application number: **14306613.2**

(22) Date of filing: **13.10.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **ALCATEL LUCENT
92100 Boulogne-Billancourt (FR)**

(72) Inventor: **Buchali, Fred
70435 Stuttgart (DE)**

(74) Representative: **2SPL Patentanwälte PartG mbB
Postfach 15 17 23
80050 München (DE)**

Remarks:
Amended claims in accordance with Rule 137(2) EPC.

(54) **Apparatus, Optical Receiver, Method and Computer Program for processing a first and a second electrical signal based on a polarization multiplexed signal comprising two polarizations**

(57)     Embodiments provide an apparatus, an optical receiver, a method and a computer program for processing a first and a second electrical signal based on an polarization multiplexed signal. Embodiments provide an apparatus (10) for processing a first electrical signal and a second electrical signal. The first electrical signal is based on an optical signal comprising two polarizations, and the second electrical signal is based on the optical signal. The apparatus (10) comprises a filter module (12) to equalize the first electrical signal resulting in a first equalized signal, and to equalize the second electrical signal resulting in a second equalized signal. The apparatus (10) further comprises a de-multiplexing module (14) to determine a first de-multiplexed signal and a second de-multiplexed signal based on the first equalized signal and the second equalized signal. The first de-multiplexed signal basically comprises components of the polarization multiplexed signal of one polarization, and the second de-multiplexed signal basically comprises components of the polarization multiplexed signal of the other polarization.

Fig. 1

**Description**

Technical Field

Embodiments relate to an apparatus, an optical receiver, a method and a computer program for processing a first and a second electrical signal based on a polarization multiplexed signal comprising two polarizations, more particularly but not exclusively to filtering and demultiplexing of different polarizations from a polarization multiplexed signal.

Background

This section introduces aspects that may be helpful in facilitating a better understanding of the invention(s). Accordingly, the statements of this section are to be read in this light and are not to be understood as admissions about what is in the prior art or what is not in the prior art.

Conventional communication systems mostly comprise a backbone part and an access part. For example, a wireless communication network may comprise a Radio Access Network (RAN) part, which establishes and controls wireless access, and a Core Network (CN), through which other networks and other users of the wireless communication network are connected. Another example of a packet data or a packet switched communication network is the communication network established between the servers and routers of the World Wide Web (WWW). With the steady increases of data demand, interfaces and networks are improved to handle the increased load. For wired connections in the network, optical data transmission using fibers is used to enhance the link capacity between such interfaces.

In communications systems, such as systems using optical data transmission, wireless, wireline or powerline communications, digital data values may be transmitted by means of an optical transmission signal. The optical transmission signal is generated by modulating the phase and/or the amplitude of an optical carrier signal, which possesses a carrier frequency, in dependence on the transmitted data values and in accordance with a constellation diagram of a respective Phase-Shift Keying (PSK) modulation or Quadrature Amplitude Modulation (QAM) method. Prominent examples are Binary Phase Shift Keying (BPSK), Quaternary Phase Shift Keying (QPSK), 16 QAM, 64 QAM, etc.

To further increase the amount of information transmitted per clock cycle, both the electrical and magnetic polarizations of a signal can be used (polarization multiplexing). To use signals transmitted over both polarizations of the polarization multiplexed signal, the two signal components can be used separately, or they can be used in combination, allowing the construction of more complex and efficient codes, but also requiring a synchronization of the signals on the two polarizations.

Further information can be found in:

Fred Buchali, Henning Bulow, "Experimental Transmission with polQAM and ps-QPSK Modulation Format using a 28-Gbaud 4-D Transmitter", Proc. ECOC 2012, Amsterdam, Netherlands, paper We.3.A.1.

Summary of illustrative Embodiments

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, an optical receiver, a method and a computer program for processing a first and a second electrical signal, wherein the first and second electrical signals are based on a polarization multiplexed signal comprising two polarizations. As existing optical cables can often be retrofitted with new optical transmitters and receivers, operators of such cables are often looking to find a way to increase the bandwidth on such cables, so no new cables are necessary when the demand for a higher bandwidth arises. One method of increasing the bandwidth of existing cables is the separate use of two polarizations of an optical signal (polarization multiplexing). To further increase the information transmitted in each clock cycle, the two polarizations may be used in combination to build more complex symbols and allow the transmission of more information per clock cycle. Embodiments provide an apparatus for processing a first electrical signal and a second electrical signal. The first and second electrical signals are based on a polarization multiplexed signal. The apparatus comprises a filter module to equalize the first electrical signal resulting in a first equalized signal, and to equalize the second electrical signal resulting in a second equalized signal. The apparatus further comprises a de-multiplexing module to determine a first de-multiplexed signal and a second de-multiplexed signal based on the first equalized signal and the second equalized signal. The first de-multiplexed signal basically comprises components of the polarization multiplexed signal of one polarization, and the second de-multiplexed signal basically comprises components of the polarization multiplexed signal of the other polarization, potentially making it possible to use a combined signal consisting of both polarizations.

In various embodiments, the filter module may comprise four filters which are configurable by filter coefficients. Two filters may be used to determine the first equalized signal from the first electrical signal and the second electrical signal, and the two other filters may be used to determine the second equalized signal from the second electrical signal and the first electrical signal. The coefficients of the filters may be based on a superposition of former first and second equalized signals, providing both equalization of the first and second electrical signal and polarization alignment of the first and second electrical signal, possibly using information of both signals to adjust the coefficients of the filters based on signal components of both polarizations.

In some embodiments, the filter module may comprise two filters. One filter may be used to determine the first equalized signal from the first electrical signal, and the other filter may be used to determine the second equalized signal from the second electrical signal. The coefficients of the filters may be based on former first and second equalized signals. Due to only using two filter modules, less hardware resources may be required for implementation.

In embodiments, a modulation used for the polarization multiplexed signal may be based on combinations of both polarizations, possibly increasing the information that can be transmitted simultaneously, or it may use two modulations independently for the two polarizations.

In various embodiments the de-multiplexing module may comprise at least one polarization control module. The polarization control module may comprise a first computation module to determine the first de-multiplexed signal based on a weighted combination of the first equalized signal and the second equalized signal, and a second computation module to determine the second de-multiplexed signal based on a weighted combination of the first equalized signal and the second equalized signal. De-multiplexing the first and second equalized signal may hence be based on combinations of the equalized signals from both polarizations.

In some embodiments at least one of the first computation module or the second computation module may be configured to apply a phase shift to the first or second equalized signal before determining the first or second de-multiplexed signal. Embodiments may counter the effects of polarization mode dispersion (PMD) and similar effects.

In various embodiments, the first computation module may be configured to determine the first de-multiplexed signal based on the first equalized signal, the cosine of a variable $\kappa$, the second equalized signal, and the sine of $\kappa$. The second computation module may be configured to determine the second de-multiplexed signal based on the first equalized signal, the negative sine of $\kappa$, a phase-shifted version of the second equalized signal, and the cosine of $\kappa$. The first and second de-multiplexed signals may then contain separated signals from the two polarizations.

In some embodiments, the de-multiplexing module may comprise two or more polarization control modules, which may be configured to operate subsequently to obtain the first and second de-multiplexed signal. At least one intermediate output of a polarization control module may be delayed before subsequent processing. Embodiments may allow compensating for higher order PMD.

In various embodiments, the apparatus may further comprise a control module to provide configuration information to the filter module and/or the de-multiplexing module. Embodiments may implement adaptive algorithms to adjust equalization and polarization alignment.

In some embodiments, the control module may be configured to provide the filter module with information related to filter coefficients based on a former first equalized signal and a former second equalized signal. Embodiments may provide transmission channel adaptive equalization.

In some embodiments, the control module may also be configured to provide the demultiplexing module with information related to a phase shift configuration and/or information related to a rotation configuration. The information may be based on former first and second de-multiplexed signals and/or based on former intermediate outputs of the demultiplexing module. Said information may then be used to perform polarization alignment and de-multiplexing.

The control module may, in some embodiments, also be configured to carry out adaptive filtering on the first and second electrical signals together with the filter module. The control module may further be configured to carry out adaptive polarization de-multiplexing of the first and second equalized signals together with the de-multiplexing module. In some embodiments the control module may provide coefficients for both the filter and the demultiplexing module.

Embodiments also provide an optical receiver comprising the apparatus, and further comprising one or more optical/electrical converters having optical inputs and electrical outputs. The first and second electrical signal may then be based on the electrical outputs of the one or more optical/electrical converters. Embodiments may provide an improved optical receiver.

Embodiments further provide a method for processing a first electrical signal and a second electrical signal. The first and second electrical signals are based on a polarization multiplexed signal. The method comprises equalizing the first electrical signal resulting in a first equalized signal, equalizing the second electrical signal resulting in a second equalized signal, and determining a first de-multiplexed signal based on the first equalized signal and the second equalized signals. The first de-multiplexed signal basically comprises components of the polarization multiplexed signal of one polarization. The method further comprises determining a second de-multiplexed signal based on the first equalized signal and the second equalized signals. The second de-multiplexed signal basically comprises components of the polarization multiplexed signal of the other polarization.

Embodiments further provide a computer program having a program code for performing at the above method, when the computer program is executed on a computer, a processor, or a programmable hardware component. A further embodiment is a computer readable storage medium storing instructions which, when executed by a computer, processor, or programmable hardware component, cause the computer to implement one of the methods described herein.

Brief description of the figures

Some other features or aspects will be described using the following non-limiting embodiments of apparatuses or methods or computer programs or computer program products by way of example only, and with reference to the accompanying figures, in which:

Fig. 1 illustrates a block diagram of an embodiment of an apparatus for processing a first electrical signal and a second electrical signal;

Fig. 2a shows two 2D constellation diagrams of QPSK on the electric polarization (TE) and magnetic polarization (TM) of a polarization multiplexed signal;

Fig 2b shows a 4D constellation diagram of polarization-switched QPSK on the electric and magnetic polarization of a polarization multiplexed signal;

Fig 2c illustrates a block diagram of an embodiment of a filter module with four filters used in dual polarization modulations

Fig. 3 illustrates a block diagram of a an embodiment of a filter module with four filters;

Fig. 4 illustrates a block diagram of an embodiment of an apparatus comprising a four-filter filter module and a de-multiplexing module;

Fig. 5 illustrates a block diagram of an embodiment of a filter module with two filters;

Fig. 6 illustrates a block diagram of an embodiment of an apparatus comprising a two-filter filter module and a de-multiplexing module;

Fig. 7 illustrates a block diagram of an embodiment of a de-multiplexing module, comprising one polarization control module;

Fig. 8 illustrates a block diagram of an embodiment of a de-multiplexing module, comprising a first and second computation module and a phase shifter;

Fig. 9 illustrates a block diagram of an embodiment of a de-multiplexing module, comprising two polarization control modules and two delay elements;

Fig. 10 shows a waterfall diagram of measurement results taken with a conventional optical receiver;

Fig. 11 shows a waterfall diagram of measurement results taken with an optical receiver comprising an embodiment of the apparatus;

Fig. 12 illustrates a block diagram of an embodiment of an optical receiver, comprising one or more optical/electrical converters and an apparatus for processing a first electrical signal and a second electrical signal; and

Fig. 13 shows a block diagram of a flow chart of an embodiment of a method for processing a first electrical signal and a second electrical signal.

Description of Embodiments

Various example embodiments will now be described more fully with reference to the accompanying drawings in which some example embodiments are illustrated. In the figures, the thicknesses of lines, layers or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention. Like numbers refer to like or similar elements throughout the description of the figures.

As used herein, the term, "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" or "including," when used herein, specify the presence of stated features, integers, steps, operations, elements or components, but do not preclude the presence or addition of one or more other features, integers, steps, operations, elements, components or groups thereof. Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

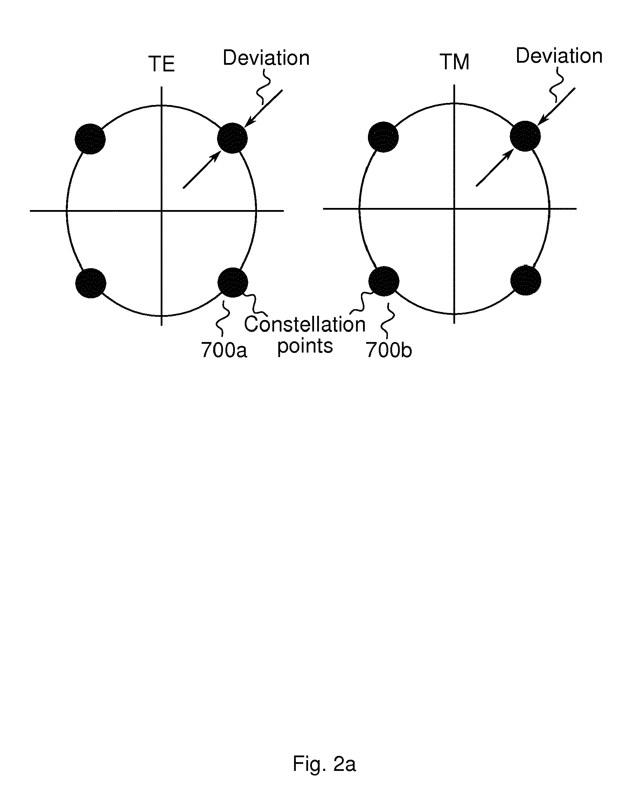

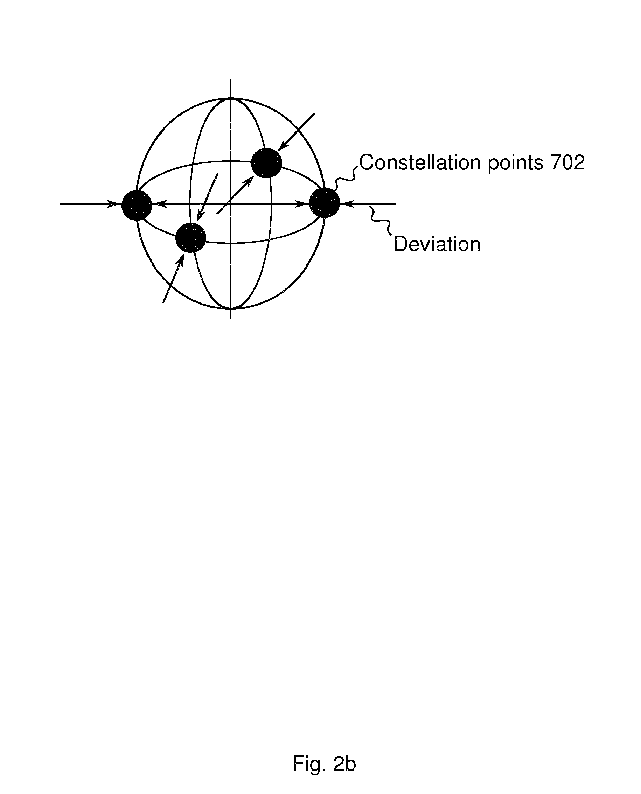

When using two polarizations of a polarization multiplexed signal, two categories of modulations may be used: two 2D modulations (Fig. 2a), which each use a single polarization, or one 4D modulation, which may synchronously use both polarization (Fig. 2b). Fig. 2a shows two 2D QPSK modulations with constellation points 700a for the horizontal polarization, and constellation points 700b for the vertical polarization. In contrast, a 4D modulation, such as polarization switched QPSK (PS-QPSK) as seen in Fig. 2b, may use constellation points 702 based on both polarizations.

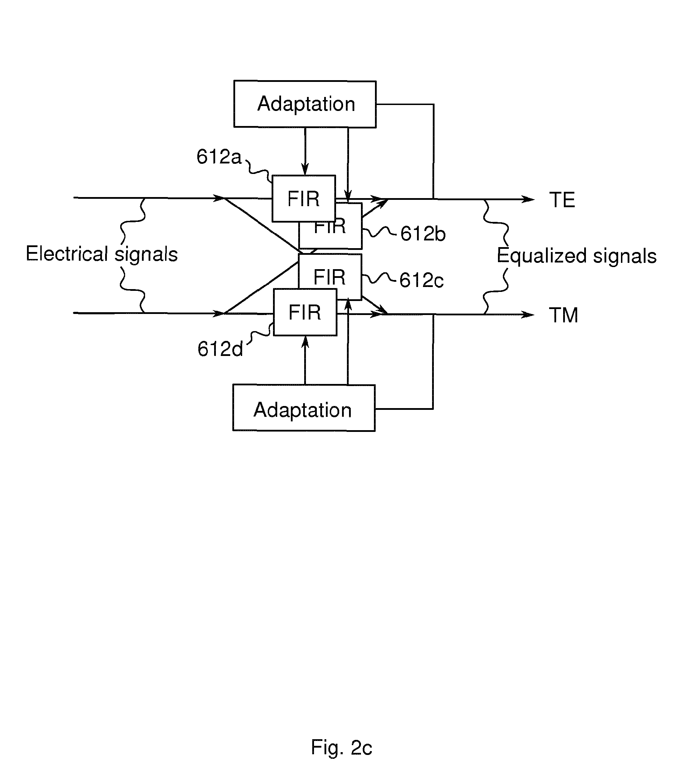

In 2D dual polarization systems the polarization demultiplexing stage may typically be combined with an alignment of the electrical phase and the channel equalization, as seen in Fig. 2c, using, for instance, four finite impulse response filters 612a-d with filter coefficient adaptation based only based on the respective polarization. Embodiments may enable channel equalization and polarization de-multiplexing for 4D modulation formats like polarization switched QPSK, polarization QAM and others. Some embodiments may consider a decision prior to a Constant Modulo Algorithm (CMA), which may cause a loss in performance. Some embodiments may delay 2 polarizations leading to independent 2D signals. However, some embodiments may provide higher performance and adapt to more complex 4D signals.

In case of fast polarization variations or fast variations of the Polarization Mode Dispersion (PMD) a number of tasks of a filter might be performed with high accuracy: polarization demultiplexing, re-timing, and channel equalization. The latter two might be considered as rather slow processes. For high accuracy long filters may be used to realize a high number of filter coefficients. In general, long filters may be slower than shorter filters. So, when it comes to filter length performance comparison there might be either a loss of performance or a reduction of maximum speed to be taken into account. As another criterion implementation complexity may be considered in some embodiments. From a complexity point of view the CMA may be border lining. A reduction of complexity may reduce chip space of Digital Signal Processors (DSPs) and power consumption.

The basic idea of at least some embodiments is the implementation of a true 4D CMA. In some embodiments for the 4D algorithm the above-mentioned three functions are not necessarily combined. The polarization de-multiplexing may be separated from the channel equalization and retiming. This separation may be introduced by a 4D feedback signal, which may be considered blind against polarization rotation. After having optimized or improved signals in both polarizations, in some embodiments the polarization de-multiplexing may be implemented in a separate block using a simple polarization controller. Such polarization controllers may correspond to a very simple block. If polarization alignment is not considered mandatory to be implemented within the CMA, the cross paths of the CMA may be deleted leading to a strong reduction in implementation effort.

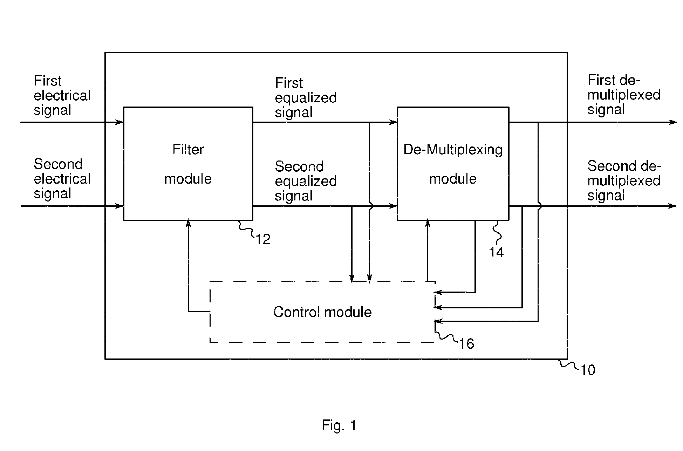

In the following, some embodiments for an apparatus, an optical receiver, a method and a computer program for processing a first and second electrical signal, wherein the first and second electrical signals are based on a polarization multiplexed signal comprising two polarizations will be described. Fig. 1 illustrates a block diagram of an embodiment of an apparatus 10, comprising a filter module 12, a de-multiplexing module 14, and an optional control module 16. As shown in Fig. 1 the filter module 12 is coupled to the de-multiplexing module 14, and both may be coupled to the optional control module 16.

The apparatus 10 is operable for processing a first electrical signal and a second electrical signal, wherein the first and second electrical signals are based on a polarization multiplexed signal. At least in some embodiments, the polarization multiplexed signal may correspond to a polarization multiplexed optical signal, and/or the first and second electrical signals may correspond to polarization filtered optical signals, where different polarization directions are used for the first and second electrical signals. As a rotation of the polarization of the optical signal in the transmission channel may be unknown, each of the first and second electrical signals may comprise polarization components of an originally transmitted signal.

The apparatus 10 comprises a filter module 12 to equalize the first electrical signal resulting in a first equalized signal, and to equalize the second electrical signal resulting in a second equalized signal. It further comprises a de-multiplexing module 14 to determine a first de-multiplexed signal and a second de-multiplexed signal based on the first equalized signal and the second equalized signal, wherein the first de-multiplexed signal basically comprises components of the polarization multiplexed signal of one polarization, and wherein the second de-multiplexed signal basically comprises components of the polarization multiplexed signal of the other polarization. In other words, the polarization components of an originally transmitted signal, may be basically reconstructed in the first and second de-multiplexed signals.

In embodiments the filter module 12, the de-multiplexing module 14, and/or a control module 16 may be implemented using one or more processing units, one or more processing devices, any means for processing, such as a processor, a computer or a programmable hardware component being operable with accordingly adapted software, a DSP, etc. In other words, the described functions of the modules 12, 14, and/or 16 may as well be implemented in software, which is then executed on one or more programmable hardware components. Such hardware components may comprise a general purpose processor, a DSP, a micro-controller, etc.

In various embodiments, a modulation used for the polarization multiplexed signal may be based on combinations of both polarizations, such as, for instance, polarized QAM or polarization switched QPSK, or two modulations may be used independently for the two polarizations. In another embodiment a CMA for 4 dimensional signals is introduced with a feedback unit, for example implemented as the control module 16, calculating the deviation of a 4D symbol based on a symbol alphabet from the 4D estimation based on the de-multiplexed first and second signals. In some embodiments, a CMA without the opportunity for polarization alignment meaning without any cross filters may be utilized and the application of a higher order PMD canceler prior or after the CMA, as will be detailed subsequently.

In some embodiments, the apparatus 10 may further comprise the control module 16, as indicated by the dashed lines in Fig. 1, to provide configuration information to the filter module 12 and/or the de-multiplexing module 14.

In some embodiments, the control module 16 may be configured to provide the filter module 12 with information related to filter coefficients based on a former first equalized signal and a former second equalized signal. The provision of former signals shall indicate a time discrete feedback loop used to feedback information based on an output processed in a former time interval. In some embodiments, the control module 16 may also be configured to provide the de-multiplexing module 14 with information related to a phase shift configuration and/or information related to a rotation configuration based on former first and second de-multiplexed signals and/or based on former intermediate outputs of the de-multiplexing module.

In some embodiments, the control module 16 may be configured to carry out adaptive filtering on the first and second electrical signals together with the filter module 12. The control module 16 may be further configured to carry out adaptive polarization demultiplexing of the first and second equalized signals together with the de-multiplexing module 14, as will be detailed subsequently.

In some embodiments, the information related to filter coefficients may be based on information provided by a Constant Modulus Algorithm (CMA) based on a minimization of an error cost function.

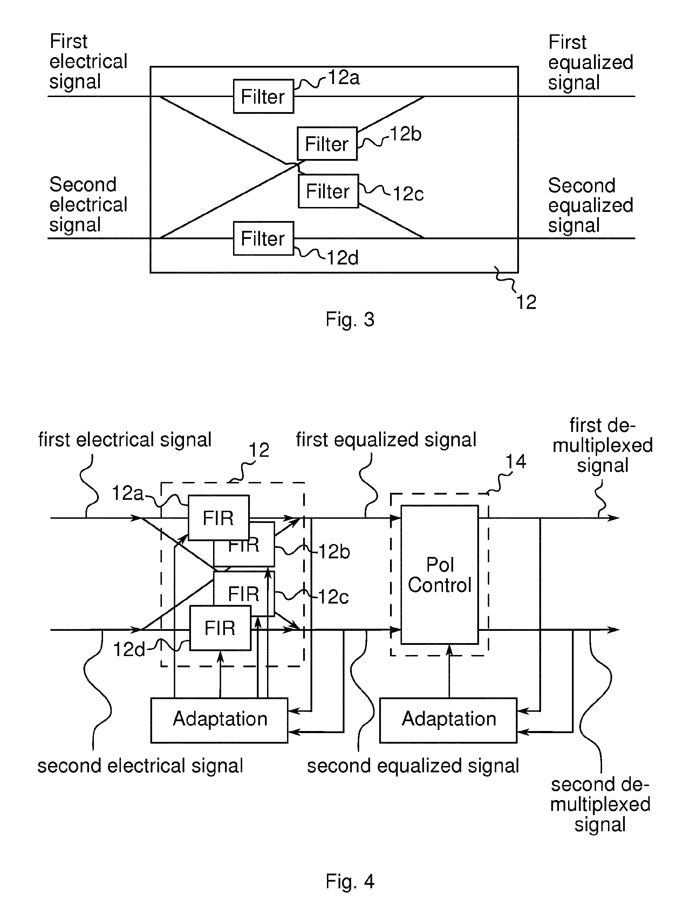

As Fig. 3 illustrates, in some embodiments, the filter module 12 may comprise four filters 12a-d which are configurable by filter coefficients. Two filters 12a, 12b may be used to determine the first equalized signal from the first electrical signal and the second electrical signal. The two other filters 12c, 12d may be used to determine the second equalized signal from the second electrical signal and the first electrical signal. The coefficients of the filters 12a-d may, as shown in Fig. 4, be based on a superposition or combination of former first and second equalized signals, providing equalization of the first and second electrical signal and, additionally or alternatively, polarization alignment of the first and second electrical signal. Fig. 4 also illustrates subsequent determination of the first and second de-multiplexed signals by the de-multiplexing module 14, which, in this embodiment is also implemented as adaptive component. In some embodiments, a 4D CMA may be constructed using

$$J_{4D} = (|z_1|^2 + |z_2|^2 - P^2)^2$$

where $z_1 = y_1' \cdot c_{11} + y_2' \cdot c_{12}$ and $z_2 = y_1' \cdot c_{21} + y_2' \cdot c_{22}$, with $y_1'$, $y_2'$ being the first and second electrical signal, $c_{11}$, $c_{12}$, $c_{21}$, $c_{22}$ being the filter coefficients, $J_{4D}$ being the 4D cost function and P being the constellation point.

Updates for a coefficient $c_{11}$ may, for instance, be derived from

$$\frac{\partial J}{\partial c_{11}} = [4 \cdot y_1 \cdot z_1].$$

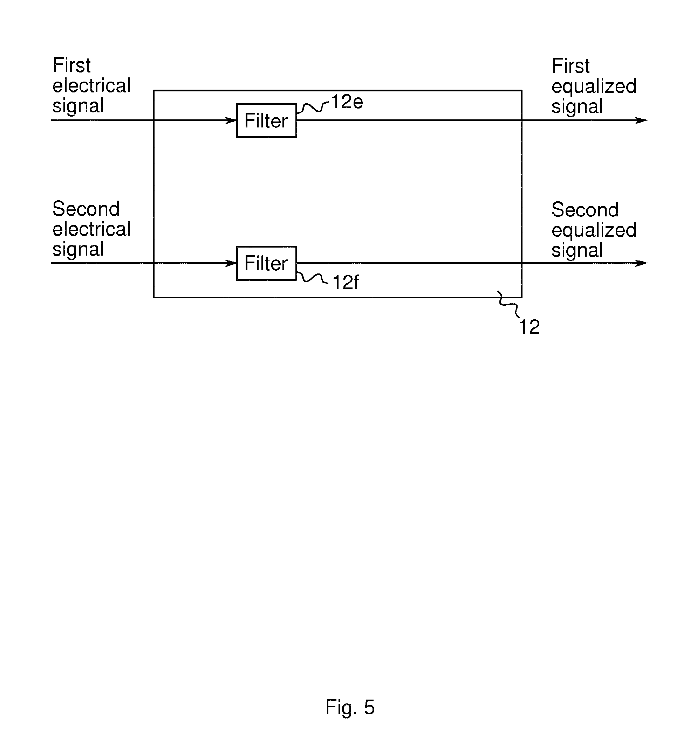

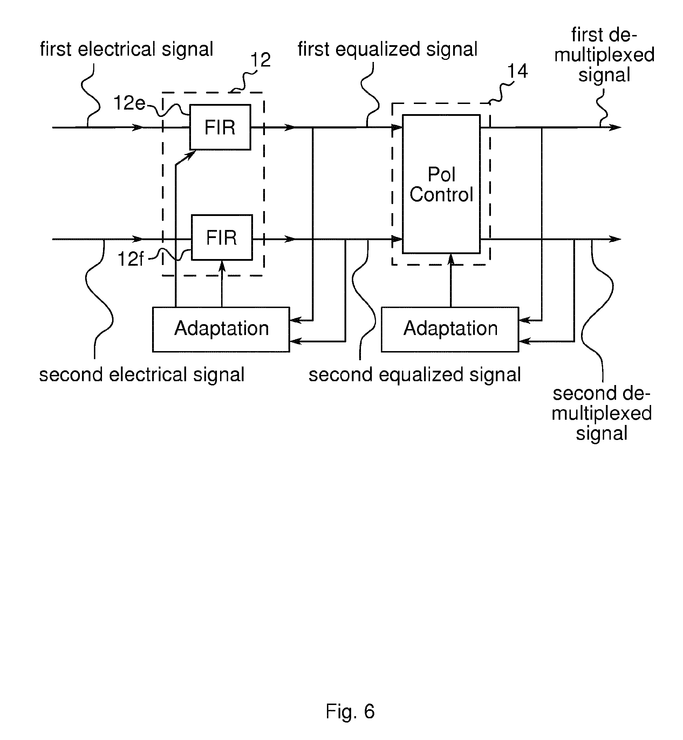

Fig. 5 illustrates a block diagram of an embodiment of the filter module 12 comprising two filters 12e, 12f. In this embodiment cross filters 12b, 12c as depicted in Fig. 3 have been deleted. One filter 12e may be used to determine the first equalized signal from the first electrical signal. The other filter 12f may be used to determine the second equalized signal from the second electrical signal. The coefficients of the filters 12e and/or 12f may be based on former first and second equalized signals, as further detailed in Fig. 6. Fig. 6 shows an adaptive filter module 12, with two filters 12e and 12f, to provide the first and second equalized signals.

In various embodiments, the filters comprised in the filter module 12 may correspond to finite impulse response (FIR) filters, infinite impulse response (IIR) filters, or other filters known in the art.

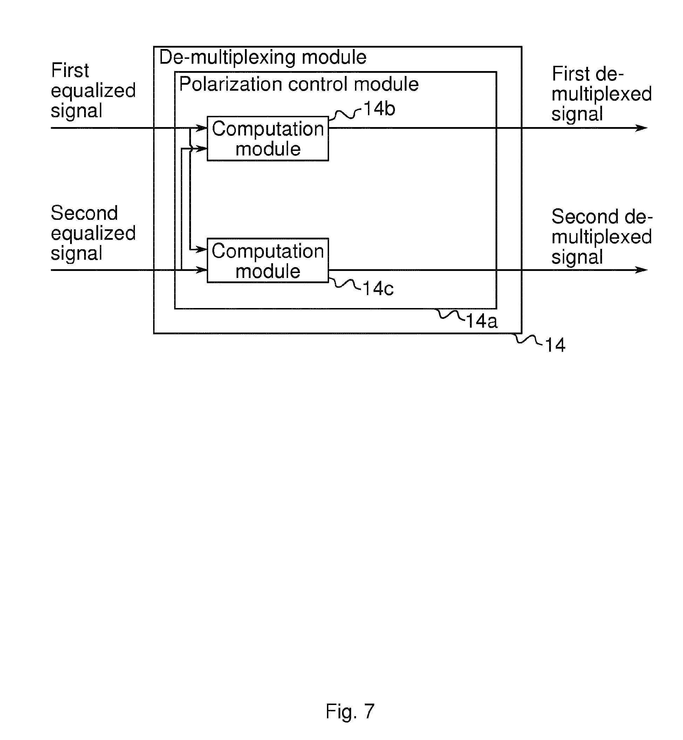

Fig. 7 illustrates a block diagram of an embodiment of the de-multiplexing module 14 comprising at least one polarization control module 14a. The at least one polarization control module 14a may comprise a first computation module 14b to determine the first de-multiplexed signal based on a weighted combination of the first equalized signal and the second equalized signal. It may further comprise a second computation module 14c to determine the second de-multiplexed signal based on a weighted combination of the first equalized signal and the second equalized signal.

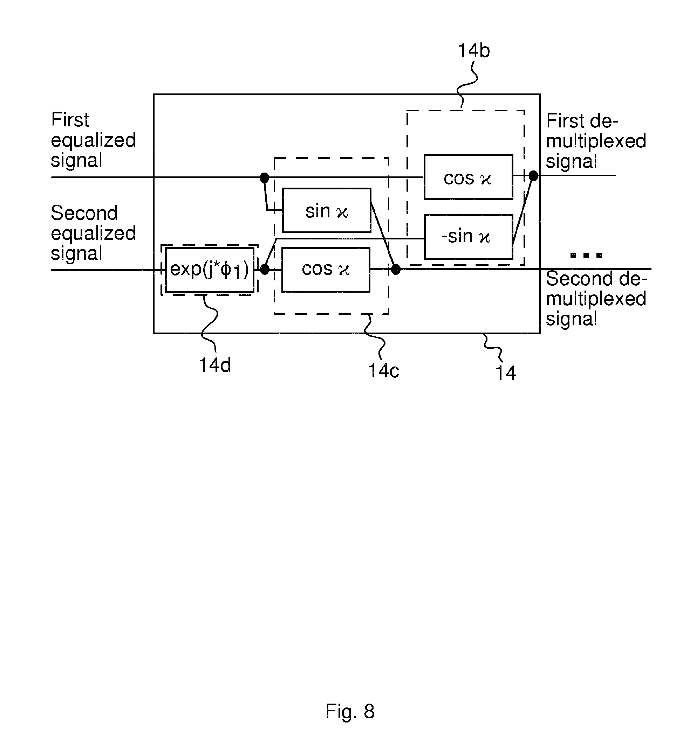

As shown in Fig. 8, in some embodiments, at least one of the first computation module 14b or the second computation module 14c may be configured to apply a phase shift 14d to the first or second equalized signal before determining the first or second de-multiplexed signal.

In some embodiments, as further shown in Fig. 8, the first computation module 14b may be configured to determine the first de-multiplexed signal based on the first equalized signal, the cosine of a variable $\kappa$, the second equalized signal, and the sine of $\kappa$, respectively. The second computation module 14c may be configured to determine the second de-multiplexed signal based on the first equalized signal, the negative sine of $\kappa$, a phase-shifted version of the second equalized signal, and the cosine of $\kappa$. In some embodiments $\kappa$ may correspond to an angular deviation of the polarization directions represented by the first and second equalized signals (one of which may be phase shifted) and the polarization direction of the optical receive signal at optical polarization filtering/de-multiplexing.

In some embodiments, updates for coefficients $\varphi_1$, $\kappa_1$ and $c_1$ may, for instance, be derived from

$$\frac{\partial J}{\partial \varphi_1} = 2 \cdot c_1 \cdot y_2 \cdot \sin \kappa_1 \cdot j \cdot \exp j \varphi_1 \cdot z_1, \quad \frac{\partial J}{\partial \kappa_1} = [2 \cdot z_2 \cdot z_1] \text{ and } \frac{\partial J}{\partial c_1} = 2 \cdot \frac{|z_1|^2}{c_1}$$

where $y$ is the input, $z$ is the output, c is the gain, $J$ is the cost function, and $\varphi$ is the phase shift on the, in this embodiment, second equalized signal.

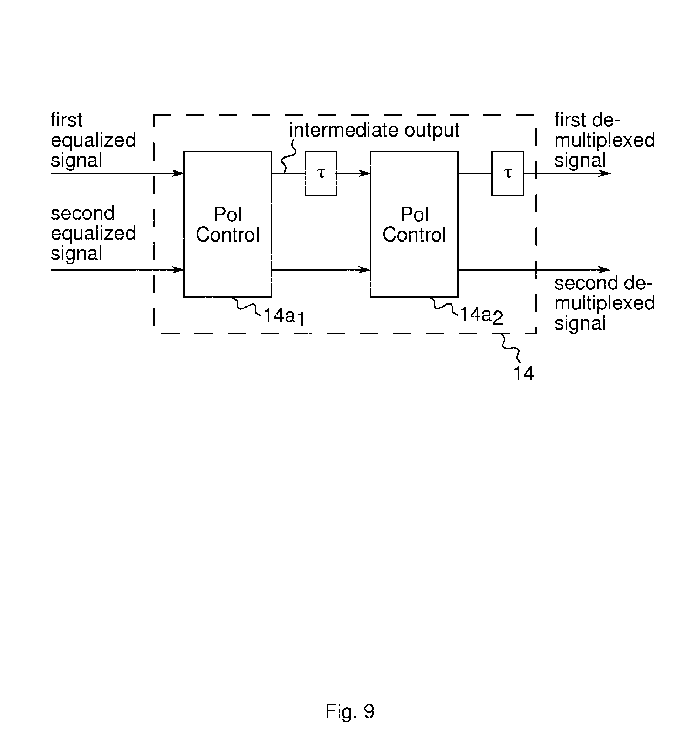

In some embodiments, with the filter module 12 comprising two filters, as shown in Figs. 4 and 5 as discussed above, the filter module 12 might provide polarization alignment, in some embodiments it might not. For lower order Polarization Mode Dispersion (PMD), polarization alignment may be provided by the polarization control module 14a of the de-multiplexing module 14. In some embodiments, higher order PMD may be compensated by one or more additional polarization controllers. To compensate higher order PMD concatenated delay lines may be applied with fixed or variable polarization controllers in-between, as shown in Fig. 9. Fig. 9 shows an embodiment of the de-multiplexing module 14, with two subsequent polarization controllers 14a1 and 14a2, where in the upper path delay components delay the signals before further processing. In embodiments the higher order compensator can be located prior or after the CMA. The delays may be half a symbol period (delay by one sample), one sample (delay by 2 samples) or intermediate steps using an interpolation filter. In some embodiments the latter may be implemented as a static filter without any adaptation.

Fig. 9 shows a block diagram of an embodiment of the de-multiplexing module 14 comprising two or more polarization control modules 14a1 and 14a2, which are configured to operate subsequently to obtain the first and second de-multiplexed signal. In some embodiments at least one intermediate output of a polarization control module may be delayed before subsequent processing.

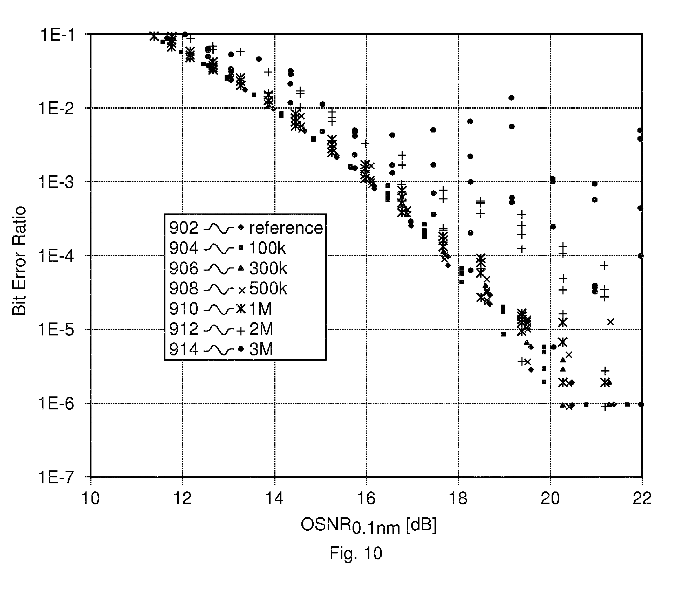

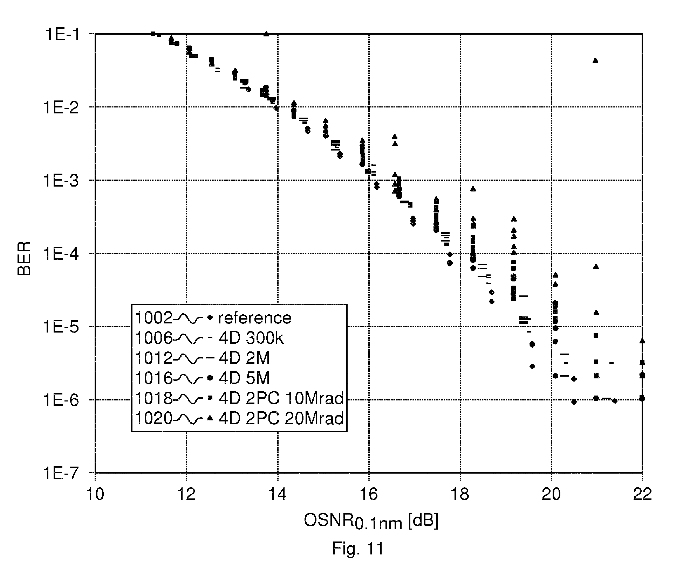

Fig. 10 and 11 show waterfall diagrams of test results using a 2D CMA (Fig. 10) and using an embodiment of apparatus 10 (Fig. 11). In both figures, the x-axis denotes the bit error rate (BER), while the y-axis denotes the optical signal-to-noise ratio in dB. Fig. 10 comprises 7 measurements using a conventional receiver with no scrambling (reference, 902), and increasingly stronger scrambling (100kRads, 300k, 500k, 1Mrads, 2M, 3M) (measurements 904, 906, 908, 910, 912, 914). Fig 10 comprises 6 measurements using an embodiment with 1 (1002-1016) and two (1018, 1020) polarization controllers with no scrambling (reference, 1002), and increasingly stronger scrambling (300kRad, 2Mrad, 5M, 10M and 20M) (measurements 1006, 1012, 1016, 1018, 1020). As can be seen, test results, even at high scrambling rates, result in lower bit error rates for embodiments, especially for embodiments using two polarization controllers.

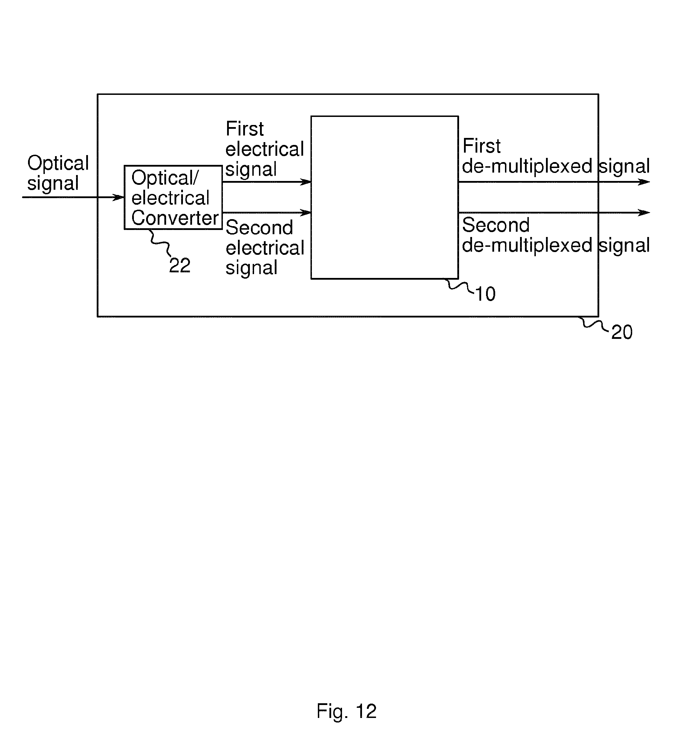

Fig. 12 shows a block diagram of an embodiment of an optical receiver 20 comprising the apparatus 10. The optical receiver 20 further comprises one or more optical/electrical converters 22 having optical inputs and electrical outputs, wherein the first and second electrical signals are based on the electrical outputs of the one or more optical/electrical converters 22. In the embodiments depicted in Fig. 12 it is assumed that the optical/electrical converter further comprises an optical polarization filter for optical polarization demultiplexing and possibly respective subsequent processing of the converted signals, such as analog-digital conversion, band conversion, sample rate conversion, etc. The electrical outputs are then input into an embodiment of the above described apparatus 10.

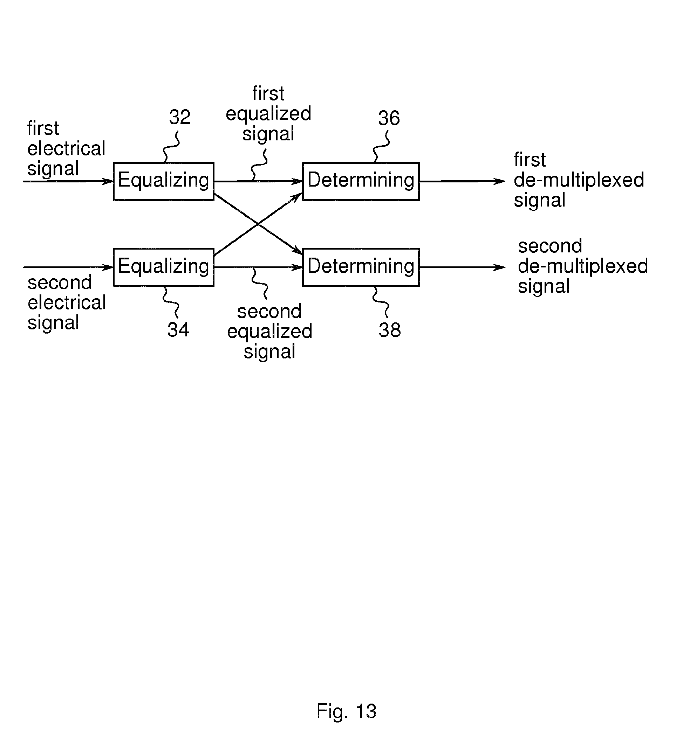

Fig. 13 shows a block diagram of a flow chart of an embodiment of a method for processing a first electrical signal and a second electrical signal, wherein the first and second electrical signals are based on a polarization multiplexed signal. The method comprises equalizing 32 the first electrical signal resulting in a first equalized signal, and equalizing 34 the second electrical signal resulting in a second equalized signal. The method further comprises determining 36 a first de-multiplexed signal based on the first equalized signal and the second equalized signals, wherein the first de-multiplexed signal basically comprises components of the polarization multiplexed signal of one polarization, and determining 38 a second de-multiplexed signal based on the first equalized signal and the second equalized signals, wherein the second de-multiplexed signal basically comprises components of the polarization multiplexed signal of the other polarization.

Some embodiments comprise a digital control circuit installed within the apparatus for performing the method. Such a digital control circuit, e.g. a Digital Signal Processor (DSP), needs to be programmed accordingly. Hence, yet further embodiments also provide a computer program having a program code for performing embodiments of the method, when the computer program is executed on a computer, a digital processor, or a programmable hardware component. A further embodiment is a computer readable storage medium storing instructions which, when executed by a computer, processor, or programmable hardware component, cause the computer to implement one of the methods described herein.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for controlling", "means for transmitting", "means for receiving", "means for transceiving", "means for processing", etc., may be provided through the use of dedicated hardware, such as "a controller", "a transmitter", "a receiver", "a transceiver", "a processor", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

**Claims**

1. An apparatus (10) for processing a first electrical signal and a second electrical signal, wherein the first and second electrical signals are based on a polarization multiplexed signal, the apparatus (10) comprising
   a filter module (12) to equalize the first electrical signal resulting in a first equalized signal, and to equalize the second electrical signal resulting in a second equalized signal; and
   a de-multiplexing module (14) to determine a first de-multiplexed signal and a second de-multiplexed signal based on the first equalized signal and the second equalized signal, wherein the first de-multiplexed signal basically comprises components of the polarization multiplexed signal of one polarization, and wherein the second de-multiplexed signal basically comprises components of the polarization multiplexed signal of the other polarization.

2. The apparatus (10) of claim 1, wherein the filter module (12) comprises four filters (12a-d) which are configurable by filter coefficients, wherein two filters are used to determine the first equalized signal from the first electrical signal and the second electrical signal and wherein the two other filters are used to determine the second equalized signal from the second electrical signal and the first electrical signal, and wherein the coefficients of the filters (12a-d) are based on a superposition of former first and second equalized signals, providing both equalization of the first and second electrical signal and polarization alignment of the first and second electrical signal.

3. The apparatus (10) of claim 1, wherein the filter module (12) comprises two filters (12e-f), wherein one filter (12e) is used to determine the first equalized signal from the first electrical signal and wherein the other filter (12f) is used to determine the second equalized signal from the second electrical signal, and wherein the coefficients of the filters (12e-f) are based on former first and second equalized signals.

4. The apparatus (10) of claim 1, wherein a modulation used for the polarization multiplexed signal is based on combinations of both polarizations, or wherein two modulations are used independently for the two polarizations.

5. The apparatus (10) of claim 1, wherein the de-multiplexing module (14) comprises at least one polarization control module (14a) comprising a first computation module (14b) to determine the first de-multiplexed signal based on a weighted combination of the first equalized signal and the second equalized signal, a second computation module (14c) to determine the second de-multiplexed signal based on a weighted combination of the first equalized signal and the second equalized signal.

6. The apparatus (10) of claim 5, wherein at least one of the first computation module (14b) or the second computation module (14c) is configured to apply a phase shift to the first or second equalized signal before determining the first or second de-multiplexed signal.

7. The apparatus (10) of claim 5, wherein the first computation module (14b) is configured to determine the first de-multiplexed signal based on the first equalized signal, the cosine of a variable $\kappa$, the second equalized signal, and

the sine of $\kappa$, and/or wherein the second computation module (14c) is configured to determine the second de-multiplexed signal based on the first equalized signal, the negative sine of $\kappa$, a phase-shifted version of the second equalized signal, and the cosine of $\kappa$.

8. The apparatus (10) of claim 5, wherein the de-multiplexing module (14) comprises two or more polarization control modules (14a1; 14a2), which are configured to operate subsequently to obtain the first and second de-multiplexed signal, and wherein at least one intermediate output of a polarization control module is delayed before subsequent processing.

9. The apparatus (10) of claim 1, further comprising a control module (16) to provide configuration information to the filter module (12) and/or the de-multiplexing module (14).

10. The apparatus (10) of claim 9, wherein the control module (16) is configured to provide the filter module (12) with information related to filter coefficients based on a former first equalized signal and a former second equalized signal.

11. The apparatus (10) of claim 9, wherein the control module (16) is configured to provide the de-multiplexing module (14) with information related to a phase shift configuration and/or information related to a rotation configuration based on former first and second de-multiplexed signals and/or based on former intermediate outputs of the de-multiplexing module.

12. The apparatus (10) of claim 9, wherein the control module (16) is configured to carry out adaptive filtering on the first and second electrical signals together with the filter module (12), and wherein the control module (16) is further configured to carry out adaptive polarization de-multiplexing of the first and second equalized signals together with the de-multiplexing module (14).

13. An optical receiver (20) comprising the apparatus (10) of claim 1, and further comprising one or more optical/electrical converters (22) having optical inputs and electrical outputs, wherein the first and second electrical signal is based on the electrical outputs of the one or more optical/electrical converters (22).

14. A method for processing a first electrical signal and a second electrical signal, wherein the first and second electrical signals are based on a polarization multiplexed signal, the method comprising
equalizing (32) the first electrical signal resulting in a first equalized signal, and equalizing (34) the second electrical signal resulting in a second equalized signal; determining (36) a first de-multiplexed signal based on the first equalized signal and the second equalized signals, wherein the first de-multiplexed signal basically comprises components of the polarization multiplexed signal of one polarization; and determining (38) a second de-multiplexed signal based on the first equalized signal and the second equalized signals, wherein the second de-multiplexed signal basically comprises components of the polarization multiplexed signal of the other polarization.

15. A computer program having a program code for performing the method of claim 14, when the computer program is executed on a computer, a processor, or a programmable hardware component.

**Amended claims in accordance with Rule 137(2) EPC.**

1. An apparatus (10) for processing a first electrical signal and a second electrical signal, wherein the first and second electrical signals are based on a polarization multiplexed signal, the apparatus (10) comprising
a filter module (12) to equalize the first electrical signal resulting in a first equalized signal, and to equalize the second electrical signal resulting in a second equalized signal; and
a de-multiplexing module (14) to determine a first de-multiplexed signal and a second de-multiplexed signal based on the first equalized signal and the second equalized signal, wherein the first de-multiplexed signal basically comprises components of the polarization multiplexed signal of one polarization, and wherein the second de-multiplexed signal basically comprises components of the polarization multiplexed signal of the other polarization.

2. The apparatus (10) of claim 1, wherein the filter module (12) comprises four filters (12a-d) which are configurable by filter coefficients, wherein two filters are used to determine the first equalized signal from the first electrical signal and the second electrical signal and wherein the two other filters are used to determine the second equalized signal from the second electrical signal and the first electrical signal, and wherein the coefficients of the filters (12a-d) are based on a superposition of former first and second equalized signals, providing both equalization of the first and second electrical signal and polarization alignment of the first and second electrical signal.

3. The apparatus (10) of claim 1, wherein the filter module (12) comprises two filters (12e-f), wherein one filter (12e) is used to determine the first equalized signal from the first electrical signal and wherein the other filter (12f) is used to determine the second equalized signal from the second electrical signal, and wherein the coefficients of the filters (12e-f) are based on former first and second equalized signals.

4. The apparatus (10) of claim 1, wherein a modulation used for the polarization multiplexed signal is based on combinations of both polarizations, or wherein two modulations are used independently for the two polarizations.

5. The apparatus (10) of claim 1, wherein the de-multiplexing module (14) comprises at least one polarization control module (14a) comprising a first computation module (14b) to determine the first de-multiplexed signal based on a weighted combination of the first equalized signal and the second equalized signal, a second computation module (14c) to determine the second de-multiplexed signal based on a weighted combination of the first equalized signal and the second equalized signal.

6. The apparatus (10) of claim 5, wherein at least one of the first computation module (14b) or the second computation module (14c) is configured to apply a phase shift to the first or second equalized signal before determining the first or second de-multiplexed signal.

7. The apparatus (10) of claim 5, wherein the first computation module (14b) is configured to determine the first de-multiplexed signal based on the first equalized signal, the cosine of a variable $\kappa$, the second equalized signal, and the sine of $\kappa$, and/or wherein the second computation module (14c) is configured to determine the second de-multiplexed signal based on the first equalized signal, the negative sine of $\kappa$, a phase-shifted version of the second equalized signal, and the cosine of $\kappa$,
wherein $\kappa$ corresponds to an angular deviation of polarization directions represented by the first and second equalized signals from a polarization direction of an optical receive signal at optical polarization filtering/de-multiplexing, wherein the first electrical signal and the second electrical signal are based on the optical receive signal.

8. The apparatus (10) of claim 5, wherein the de-multiplexing module (14) comprises two or more polarization control modules (14a1; 14a2), which are configured to operate subsequently to obtain the first and second de-multiplexed signal, and wherein at least one intermediate output of a polarization control module is delayed before subsequent processing.

9. The apparatus (10) of claim 1, further comprising a control module (16) to provide configuration information to the filter module (12) and/or the de-multiplexing module (14).

10. The apparatus (10) of claim 9, wherein the control module (16) is configured to provide the filter module (12) with information related to filter coefficients based on a former first equalized signal and a former second equalized signal.

11. The apparatus (10) of claim 9, wherein the control module (16) is configured to provide the de-multiplexing module (14) with information related to a phase shift configuration and/or information related to a rotation configuration based on former first and second de-multiplexed signals and/or based on former intermediate outputs of the de-multiplexing module.

12. The apparatus (10) of claim 9, wherein the control module (16) is configured to carry out adaptive filtering on the first and second electrical signals together with the filter module (12), and wherein the control module (16) is further configured to carry out adaptive polarization de-multiplexing of the first and second equalized signals together with the de-multiplexing module (14).

13. An optical receiver (20) comprising the apparatus (10) of claim 1, and further comprising one or more optical/electrical converters (22) having optical inputs and electrical outputs, wherein the first and second electrical signal is based on the electrical outputs of the one or more optical/electrical converters (22).

14. A method for processing a first electrical signal and a second electrical signal, wherein the first and second electrical signals are based on a polarization multiplexed signal, the method comprising
equalizing (32) the first electrical signal resulting in a first equalized signal, and equalizing (34) the second electrical signal resulting in a second equalized signal; determining (36) a first de-multiplexed signal based on the first equalized signal and the second equalized signals, wherein the first de-multiplexed signal basically comprises components of the polarization multiplexed signal of one polarization; and determining (38) a second de-multiplexed signal based on the first equalized signal and the second equalized signals, wherein the second de-multiplexed signal basically comprises components of the polarization multiplexed signal of the other polarization.

**15.** A computer program having a program code for performing the method of claim 14, when the computer program is executed on a computer, a processor, or a programmable hardware component.

First
electrical
signal

Second
electrical
signal

Filter
module

First
equalized
signal

Second
equalized
signal

De-Multiplexing
module

First de-
multiplexed
signal

Second de-
multiplexed
signal

12

14

Control module

16

10

Fig. 1

Fig. 2a

Constellation points 702

Deviation

Fig. 2b

Fig. 2c

First
electrical
signal

First
equalized
signal

Second
electrical
signal

Second
equalized
signal

Filter ~12a

Filter ~12b

Filter ~12c

Filter ~12d

12

Fig. 3

first electrical signal

first equalized signal

first de-
multiplexed
signal

12

14

12a

FIR

FIR ~12b

FIR ~12c

FIR

12d

Pol
Control

Adaptation

Adaptation

second electrical signal

second equalized signal

second de-
multiplexed
signal

Fig. 4

First
electrical
signal

First
equalized
signal

Filter  12e

Second
electrical
signal

Second
equalized
signal

Filter

12f

12

Fig. 5

first electrical signal    12    first equalized signal      first de-multiplexed signal

12e

FIR

Pol Control

14

12f

FIR

Adaptation

Adaptation

second electrical signal      second equalized signal      second de-multiplexed signal

Fig. 6

First
equalized
signal

De-multiplexing module

Polarization control module

⌐14b

Computation
module

First de-
multiplexed
signal

Second
equalized
signal

Computation
module

14c

Second de-
multiplexed
signal

14a

14

Fig. 7

14b

First
equalized
signal

First de-
multiplexed
signal

cos ϰ

Second
equalized
signal

sin ϰ

-sin ϰ

exp(j*φ₁)

cos ϰ

Second de-
multiplexed
signal

14d

14c

14

Fig. 8

first
equalized
signal

intermediate output

first de-
multiplexed
signal

τ

Pol
Control

second
equalized
signal

Pol
Control

τ

14a₁

14a₂

second de-
multiplexed
signal

14

Fig. 9

Fig. 10

Fig. 11

Optical
signal

Optical/
electrical
Converter

First
electrical
signal

Second
electrical
signal

22

First
de-multiplexed signal

Second
de-multiplexed signal

10

20

Fig. 12

Fig. 13

Europäisches
Patentamt

European
Patent Office

Office européen
des brevets

# EUROPEAN SEARCH REPORT

Application Number

EP 14 30 6613

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/336654 A1 (ARIKAWA MANABU [JP] ET AL) 19 December 2013 (2013-12-19) | 1,2,4-6, 9,13-15 | INV. H04B10/61 H04J14/06 |
| A | * page 1, paragraph 12 - page 2, paragraph 18; figures 2-6 * * page 3, paragraph 45 - page 5, paragraph 91 * | 7,8,11 | |
| | ----- | | |
| X | EP 2 645 599 A1 (ALCATEL LUCENT [FR]) 2 October 2013 (2013-10-02) * column 7, paragraph 28 - column 11, paragraph 40; figures 2,3 * | 1,14 | |
| | ----- | | |
| X | US 2012/002979 A1 (XIE CHONGJIN [US]) 5 January 2012 (2012-01-05) | 1,3,10, 12,14 | |
| A | * page 2, paragraph 18 - page 4, paragraph 41; figures 1-3 * | 7,8,11 | |
| | ----- | | |
| X | EP 2 464 069 A2 (FUJITSU LTD [JP]) 13 June 2012 (2012-06-13) * page 4, paragraph 23 - page 5, paragraph 34; figures 2,4,5 * | 1,14 | |
| | ----- | | TECHNICAL FIELDS SEARCHED (IPC) |
| X | US 2013/251370 A1 (OGASAHARA DAISAKU [JP]) 26 September 2013 (2013-09-26) * page 6, paragraph 60 - page 8, paragraph 86 * | 1,14 | H04B H04J |
| | ----- | | |

The present search report has been drawn up for all claims

| Place of search | Date of completion of the search | Examiner |
|---|---|---|
| Munich | 15 April 2015 | Koch, Bernhard |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

**EP 3 010 166 A1**

## ANNEX TO THE EUROPEAN SEARCH REPORT
## ON EUROPEAN PATENT APPLICATION NO.

EP 14 30 6613

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2015

| Patent document cited in search report | | Publication date | Patent family member(s) | | Publication date |
|---|---|---|---|---|---|
| US 2013336654 | A1 | 19-12-2013 | US 2013336654 A1<br>WO 2012118215 A1 | | 19-12-2013<br>07-09-2012 |
| EP 2645599 | A1 | 02-10-2013 | CN 104170283 A<br>EP 2645599 A1<br>KR 20140130721 A<br>US 2015037034 A1<br>WO 2013143976 A1 | | 26-11-2014<br>02-10-2013<br>11-11-2014<br>05-02-2015<br>03-10-2013 |
| US 2012002979 | A1 | 05-01-2012 | NONE | | |
| EP 2464069 | A2 | 13-06-2012 | EP 2464069 A2<br>JP 5633352 B2<br>JP 2012124782 A<br>US 2012148266 A1 | | 13-06-2012<br>03-12-2014<br>28-06-2012<br>14-06-2012 |
| US 2013251370 | A1 | 26-09-2013 | CN 103354982 A<br>EP 2672635 A1<br>JP 5120507 B2<br>US 2013251370 A1<br>WO 2012105070 A1 | | 16-10-2013<br>11-12-2013<br>16-01-2013<br>26-09-2013<br>09-08-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **FRED BUCHALI ; HENNING BULOW.** Experimental Transmission with polQAM and ps-QPSK Modulation Format using a 28-Gbaud 4-D Transmitter. *Proc. ECOC 2012, Amsterdam, Netherlands,* 2012